# EUROPÄISCHE PATENTSCHRIFT

(11) **EP 1 730 058 B1**
(45) Veröffentlichungstag und Bekanntmachung des Hinweises auf die Patenterteilung: **04.06.2008**
(21) Anmeldenummer: 05716092.1
(22) Anmeldetag: 16.03.2005
(51) Int. Cl.: B65G 53/28, B65G 53/52

(54) **VORRICHTUNG UND VERFAHREN ZUR PNEUMATISCHEN FÖRDERUNG VON FE INTEILIGEN SCHÜTTGÜTERN**
DEVICE AND METHOD FOR PNEUMATICALLY CONVEYING FINE-PARTICLE BULK MATERIALS
DISPOSITIF ET PROCEDE POUR LE TRANSPORT PNEUMATIQUE DE MATIERES EN VRAC FINEMENT DIVISEES

(30) Priorität: 23.03.2004 DE 102004014059
(43) Veröffentlichungstag der Anmeldung: 13.12.2006
(73) Patentinhaber: LANXESS Deutschland GmbH, 51369 Leverkusen (DE)
(72) Erfinder: GRASSHOFF, Herbert, 47443 Moers (DE); VAN MULLEKOM, Robert, Hubertus, NL-5911 AL Venlo (NL); BIENMÜLLER, Matthias, 47803 Krefeld (DE); JOACHIMI, Detlev, 47800 Krefeld (DE); DE BOCK, Maarten, B-2920 Kalmthout (BE)
(86) Internationale Anmeldenummer: PCT/EP2005/002765
(87) Internationale Veröffentlichungsnummer: WO 2005/092751

(56) Entgegenhaltungen:
- CH-A5- 676 112
- DE-A1- 10 127 427

## Beschreibung

Die Erfindung betrifft eine Vorrichtung sowie ein Verfahren zur pneumatischen Förderung von feinteiligen Schüttgütern, beispielsweise geschnittenen Glasfasern für die Verstärkung von Kunststoffe.

Glasfasern werden in großen Mengen in der Kunststoffherstellung - insbesondere für die Herstellung glasfaserverstärkter Kunststoffe - eingesetzt. Dabei ist für die Handhabung der Glasfasern, insbesondere der Transport und die Beschickung der Produktionsanlagen ein erheblicher Aufwand erforderlich. Der Platzbedarf für die Bevorratung der Glasfasergebinde ist erheblich.

Glasfasern für die Verstärkung von thermoplastischen Kunststoffe werden üblicherweise in Form von Faserbündeln, so genannte Chopped Strands, verarbeitet. Die Faserbündel bestehen dabei beispielsweise aus 2000 Einzelfasern (Durchmesser der Einzelfasern: etwa 10 µm) mit einer typischen Länge von etwa 4,5 mm. In den gängigen Produktionsanlagen für glasfaserverstärkte Thermoplaste werden die geschnittenen Glasfasern z.B. auf einem Extruder mit dem geschmolzenen thermoplastischen Kunststoff und ggf. weiteren Additiven gemischt. Die Extruder müssen dabei mit erhebliche Mengen an geschnittenen Glasfasern versorgt werden.

Aus dem Stand der Technik bekannte Fördertechniken zur absatzweisen Beschickung/Befüllung von Produktionsanlagen mit geschnittenen Glasfasern sind Aufzuganlagen und Flurförderfahrzeuge wie Gabelstapler oder Krananlagen. Kontinuierliche Förderung kann z.B. über Becherwerke, Stetigförderer, Rüttel- bzw. Vibrationsrinnen oder Transportbänder erfolgen.

Nachteilig ist, dass diese Fördertechniken zum Teil sehr aufwendig sind und aufgrund ihrer Bauart und ihres Platzbedarfs nur schwer in bereits vorhandene Produktionsanlagen und deren Gebäudelogistik zu integrieren sind.

Ein Ausweg bietet der Einsatz von Anlagen zur pneumatischen Förderung von Schüttgütern, wie sie beispielsweise in EP 0 692 441 A beschrieben sind. Die in EP 0 692 441 A beschriebenen pneumatischen Förderanlagen arbeiten in so genannten Saug-Druck-Zyklen, wobei im Saugzyklus die Anlage mit Schüttgut aus einem Aufgabebehälter teilbefüllt wird und im Druckzyklus das eingefüllte Material zum Zielort gefördert wird. Eine besondere Anordnung der Druckluftversorgung verhindert das Verstopfen solcher Anlagen.

Bei der in EP 0 692 441 A beschriebenen Anlage wir der Unterdruck während eines Saugzyklus am Zielort erzeugt. Für bestimmte Anlageauslegungen stellt dies einen erheblichen Nachteil dar, weil beispielsweise Aufgabeort und Zielort des Schüttgutes in der Anlage weit auseinander liegen, wodurch der Druckabfall zu groß ist, oder weil an ein oder mehreren Stellen zwischen Aufgabeort und Zielort Druckverluste aufgrund von Winkel, Durchmesserverringerungen, Weichen, Hähne o. dgl. in den Leitungen auftreten können. Es kann auch sein, dass die Infrastruktur der Anlage am Zielort eine Unterdruckversorgung nicht zulässt. Ein weiterer Nachteil ist, dass während eines Saugzyklus die Fördergeschwindigkeit im Gesamtförderrohr so groß wird, dass es zu Qualitätsverlusten beim Schüttgut kommt, insbesondere bei empfindlichen Schüttgütern wie geschnittenen Glasfasern.

Das Dokument DE 101 27 427 A entspricht eine Vorrichtung zu pneumatischen Förderung von feinteiligen Schüttgütern, das als Stand der Technik angesehen ist.

In der Offenlegungsschrift DE 101 27 427 A wird eine Vorrichtung zu pneumatischen Förderung von feinteiligen Schüttgütern, insbesondere Glasfasern, beschrieben, die wenigstens einen Aufgabebehälter, ein pneumatisches Förderrohr mit einem ersten Abschnitt und einem zweiten Abschnitt, eine Saugfördereinrichtung für das Fördergas, die mit dem Ende des ersten Abschnitts des Förderrohrs verbunden ist, eine Druckfördereinrichtung für das Fördergas, eine Fördergasnebenleitung, mehrere Absperrarmaturen zwischen pneumatischem. Förderrohr und Fördergasnebenleitung sowie eine Abgabestelle aufweist.

Die in DE 101 27 427 A beschriebene Vorrichtung hat im Gegensatz zu der in EP 0 692 441 A beschriebenen Vorrichtung nicht den Nachteil, dass in der Saug- bzw. Einfüllphase des Förderzyklus am Zielort auf die gesamte Vorrichtung Unterdruck erzeugt werden muss, sondern nur im ersten Abschnitt des Förderrohres. Ein weiterer Vorteil der in DE 101 27 427 A beschriebenen Vorrichtung sind das effizientere Betreiben der Förderanlage, weil die erste Phase (Einfüllen der Glasfasern in Abschnitt 1) und die dritte Phase des Förderzyklus (Fördern der Glasfasern in Abschnitt 2) gleichzeitig erfolgen kann. Ferner kann bei der aus DE 101 27 427 A bekannten Vorrichtung die Fördergeschwindigkeit besser kontrolliert werden.

Nachteilig an der aus DE 101 27 427 A bekannten Vorrichtung ist, dass eine langfristig kontinuierliche Versorgung von Schüttgut zu der Abgabestelle nicht realisiert werden kann, weil nach gewisser Zeit der Aufgabebehälter leer ist und neu befüllt oder durch einen vollen Aufgabebehälter ersetzt werden muss, wodurch die Anlage gewisse Zeit außer Betrieb ist. Darüber hinaus ist die Flexibilität der beschriebenen Anlage hinsichtlich verschiedener Schüttgutqualitäten (z.B. Glasfaser für die Verstärkung von Polypropylen bzw. Polyphenylensulfid) beschränkt, weil der Aufgabebehälter erst entleert werden muss, bevor eine andere Schüttgutqualität eingefüllt werden kann.

Aufgabe der vorliegenden Erfindung ist es, eine Vorrichtung zur Förderung von feinteiligem Schüttgut, insbesondere Glasfasern, zur Verfügung zu stellen, welche langfristig kontinuierlich betrieben werden kann, ohne dass es bei der Befüllung des Aufgabebehälters oder bei einem Austausch eines leeren Aufgabebehälters gegen einen vollen Aufgabebehälter zu einem Stillstand der Förderanlage, und damit zu einem Stillstand der der Fördervorrichtung nachgeschalteten Anlagen, z.B. Extruder, kommt. Außerdem soll die Fördervorrichtung es ermöglichen, mit möglichst geringem Aufwand auf andere Schüttgutqualitäten zu wechseln. Dies bedeutet, dass ein Wechsel der Schüttgutqualität sollte ohne Entleerung oder Austausch eines Aufgabebehälters möglich sein.

Gegenstand der Erfindung ist eine Vorrichtung zur pneumatischen Förderung von feinteiligen Schüttgütern, insbesondere Glasfasern, bestehend aus
(i) zwei oder mehreren Aufgabeeinrichtungen (1A, 1B, 1C), welche jeweils über eine Absperreinrichtung (11A, 11B, 11C) mit einem ersten Ende eines Zufuhrförderrohrs (2A, 2B, 2C) verbunden sind, wobei das jeweils zweite Ende des Zufuhrförderrohrs (2A, 2B, 2C) im Bereich eines ersten Endes mit einem Hauptförderrohr (17) über eine Absperreinrichtung (15A, 15B, 15C) verbunden ist,
(ii) einer oder mehreren Abgabeeinrichtungen (8A, 8B, 8C), welche jeweils mit dem Hauptförderrohr (17) über eine Absperreinrichtung (18A, 18B, 18C) verbunden ist,
(iii) einer dem Hauptförderrohr (17) und den Zufuhrförderrohren (2A, 2B, 2C) parallel geschalteten Fördergasnebenleitung (4), wobei die Fördergasnebenleitung (4) durch eine Vielzahl von Verbindungsleitungen (5) mit dem Hauptförderrohr (17) und den Zufuhrförderrohren (2A, 2B, 2C) verbunden ist,
(iv) einer Saugfördereinrichtung (3), welche jeweils mit dem zweiten Ende eines Zufuhrförderrohrs (2A, 2B, 2C) mittels Absperreinrichtungen (10A, 10B, 10C) absperrbar verbunden ist,
(v) einer Druckfördereinrichtung (16), welche jeweils mit dem ersten Ende eines Zufuhrförderrohrs (2A, 2B, 2C) mittels Absperreinrichtungen (12A, 12B, 12C) und mit der Fördergasnebenleitung (4) mittels einer Absperreinrichtung (13) und mit dem ersten Ende des Hauptförderrohrs (17) mittels einer Absperreinrichtung (14) absperrbar verbunden ist, und
(vi) Absperreinrichtungen (6) in den Verbindungsleitungen (5).

Die erfindungsgemäße Vorrichtung ermöglicht die pneumatische Förderung von feinteiligen Schüttgütern, insbesondere geschnittenen Glasfasern, aus mehreren Aufgabeeinrichtungen über eine Förderleitung zu einer oder mehreren Abgabeeinrichtungen. Die Vorrichtung ist vergleichsweise einfach, insbesondere raumsparend, aufgebaut und kann daher ohne Einschränkungen in eine komplexe Gebäudeinfrastruktur integriert werden. Darüber hinaus ist die Vorrichtung in starkem Maße betriebssicher, wartungsarm und leicht zu bedienen. Sie arbeitet ferner materialschonend.

Mehrere Aufgabeeinrichtungen und Abgabeeinrichtungen bedingen zwangsläufig eine vermehrte Zahl an Winkeln, Weichen, Absperreinrichtungen, z.B. Hähne, o. dgl., was die materialschonende Förderung des Schüttgutes erschwert und zu erhöhtem Druckverlust in der pneumatischen Förderanlage führt. Trotz mehrerer Aufgabeeinrichtungen und ggf. mehrerer Abgabeeinrichtungen können bei der erfindungsgemäßen Vorrichtung Aufgabeorte und Zielorte des Schüttgutes weit auseinander liegen, ohne dass der Druckabfall zu groß wird.

Die erfindungsgemäße Vorrichtung mit mehreren Aufgabeeinrichtungen und ggf. mehreren Abgabeeinrichtungen gewährleistet eine kontinuierliche Versorgung der Produktionsanlage mit feinteiligen Schüttgütern, insbesondere Glasfasern. Handelt es sich bei den Aufgabeeinrichtungen um Behälter, Container o. dgl., aus denen die Fördervorrichtung diskontinuierlich beschickt wird, kann die erfindungsgemäße Vorrichtung so betrieben werden, dass nach dem Entleeren eines ersten Behälters direkt das Entleeren eines zweiten Behälters erfolgt, wodurch eine kontinuierliche Beschickung der Vorrichtung möglich ist. Auch können die mehreren Aufgabeeinrichtungen für verschiedene Schüttgüter eingesetzt werden, beispielsweise unterschiedliche Glasfasertypen für die Verstärkung von verschiedenen Thermoplasten. Daneben kann eine einzige Vorrichtung mit Hilfe mehrfacher Abgabeeinrichtungen mehrere Produktstrassen, beispielsweise gleichzeitig, mit Schüttgütern versorgen. Prinzipiell ist es möglich, das Schüttgut gleichzeitig aus mehreren Aufgabeeinrichtungen über die jeweilige Zufuhrförderleitung zu fördern.

Erfindungsgemäß sind zwei oder mehrere Aufgabeeinrichtungen jeweils über eine Absperreinrichtung mit einem ersten Ende eines Zufuhrförderrohrs verbunden, wobei das jeweils zweite Ende des Zufuhrförderrohrs im Bereich eines ersten Endes mit einem Hauptförderrohr über eine Absperreinrichtung verbunden ist. Unter dem Bereich eines ersten Endes des Hauptförderrohrs ist gemäß vorliegender Erfmdung zu verstehen, dass die Zufuhrförderrohre an dem ersten Ende des Hauptförderrohrs oder in einem gewissen Abstand von dem ersten Ende des Hauptförderrohrs angebracht sind, wobei der Abstand klein ist im Verhältnis zur Gesamtlänge des Hauptförderrohrs. Die Zufuhrförderrohre können entweder an einer gemeinsamen Verbindungsstelle oder jeweils über eine einzelne Verbindungsstelle mit dem Hauptförderrohr verbunden sein. Die Verbindung der Zufuhrförderrohre mit dem Hauptförderrohr erfolgt bevorzugt mittels Rohrweichen.

Als Aufgabeeinrichtungen sind Container, BIG-BAGs (Gewebecontainer), Silos, Bunker, Lagerräume, Kessel o. dgl. geeignet. Bevorzugt werden Schüttgutcontainer eingesetzt, welche über ein Verbindungsrohr mit, insbesondere einem Einlaufverschlussventil, der erfindungsgemäßen Vorrichtung verbunden sind.

Die Abgabeeinrichtungen können beispielsweise nur zu Lager- oder Dosierzwecken oder aber als Einrichtungen zur Weiterverarbeitung des feinteiligen Schüttguts selbst dienen. Sie können z.B. die Vorlage für einen Extruder sein. Grundsätzlich sind als Abgabeeinrichtungen alle Behälter wie Container, BIG-BAGs (Gewebecontainer), Silos, Bunker, Lagerräume, Kessel, Auflieger für Lastkraftwagen, Reaktions- oder Weiterverarbeitungskessel, Extruder oder sonstige Behälter und Apparate geeignet.

Die Abgabeeinrichtungen können im Wesentlichen direkt mit dem Hauptförderrohr über eine Absperreinrichtung verbunden sein. Dabei sind sie zum Beispiel im Bereich des zweiten Endes mit dem Hauptförderrohr verbunden. Im Bereich des zweiten Endes des Hauptförderrohrs bedeutet im Sinne der vorliegenden Erfindung, dass die Abgabeeinrichtung an dem zweiten Ende angebracht sein kann oder in einem gewissen Abstand von dem zweiten Ende, wobei der Abstand im Vergleich zur Gesamtlänge des Hauptförderrohrs sehr kurz ist. Insbesondere für den Fall, dass mehrere Abgabeeinrichtungen vorgesehen sind, können deren Verbindungsstellen mit dem Hauptförderrohr über einen Bereich an dem zweiten Ende des Hauptförderrohrs verteilt sein. Sind mehrere Abgabeeinrichtungen vorgesehen, können diese auch eine gemeinsame Verbindungsstelle mit dem Hauptförderrohr aufweisen, wobei aber jede Abgabeeinrichtung mit jeweils einer Absperreinrichtung mit dem Hauptförderrohr verbunden ist. Die Verbindung der Absperreinrichtungen mit dem Hauptförderrohr können z.B. über Rohrweichen erfolgen. Die Abgabeeinrichtungen können außer im Bereich des zweiten Endes des Hauptförderrohrs grundsätzlich auch an beliebiger anderer Stelle des Hauptförderrohrs angebracht sein.

In einer bevorzugten Ausführungsform sind die Abgabeeinrichtungen nicht direkt über eine Absperreinrichtung mit dem Hauptförderrohr verbunden, sondern jeweils mit einem ersten Ende eines Abfuhrförderrohrs, wobei das jeweils zweite Ende des Abfuhrförderrohrs mit dem Hauptförderrohr über die Absperreinrichtung verbunden ist. Das Abfuhrförderrohr kann im Wesentlichen von beliebiger Länge sein und kann im Wesentlichen an beliebiger Position mit dem Hauptförderrohr verbunden sein. Die Absperreinrichtung kann dabei prinzipiell an beliebiger Position entlang des Abfuhrförderrohrs angebracht sein. Die Absperreinrichtung ist vorzugsweise ein Quetschventil.

Bei den Zufuhr- und Abfuhrförderrohren sowie dem Hauptförderrohr handelt es sich vorzugsweise um Rohre mit Nennweiten von 100 bis 200 mm und einer Länge von beispielsweise 1 bis 200 m. Die Rohre sind vorzugsweise in durchgehärtetem Stahl ausgeführt. Besonders bevorzugt weisen die Förderrohre an der Innenwand eine Härte von 50 bis 90 HRC, besonders bevorzugt von 60 bis 65 HRC auf. Vorzugsweise sind die Förderrohre aus verschiedenen Segmenten zusammengesetzt, die beispielsweise über Flanschverbindungen verbunden sind. Zur schonenden Förderung der Fasern ist insbesondere auf eine vor- und rücksprungfreie Verlegung der Förderrohre zu achten.

Das Hauptförderrohr ist vorzugsweise länger als die einzelnen Zufuhrförderrohre. Die Vorrichtung kann im Wesentlichen mit einer beliebigen Anzahl von Zufuhr- und Abfuhrförderrohren gestaltet werden, wobei mindestens zwei Zufuhrförderrohre vorgesehen sind, welche mit jeweils einer Aufgabeeinrichtung verbunden sind.

Als Fördergasnebenleitung ist grundsätzlich jede einfache Rohrleitung geeignet, die ebenfalls vorzugsweise aus verschiedenen Segmenten zusammengesetzt sein kann, die beispielsweise über Flanschverbindungen verbunden sind. Die Nebenleitung ist endständig verschlossen oder schließbar, damit sich in der Nebenleitung Druck aufbauen kann.

Die Fördergasnebenleitung ist mit dem Hauptförderrohr und den Zufuhrförderrohren sowie, falls vorhanden, den Abfuhrförderrohren parallel geschaltet. Sie ist mit den Förderrohren durch eine Vielzahl von Verbindungsleitungen, beispielsweise über mehrere kurze Rohrstücke, verbunden. Die Verbindungsleitungen tragen die Absperreinrichtungen. Der Abstand zwischen zwei benachbarten Verbindungsleitungen beträgt vorzugsweise 200 bis 2000 mm.

Als Saugfördereinrichtung sind beliebige Maschinen zur Erzeugung von Unterdruck für Gase geeignet. Vorzugsweise wird ein Gebläse oder ein Ventilator eingesetzt. Die Saugfördereinrichtung ist jeweils mit dem zweiten Ende eines Zufuhrförderrohrs absperrbar verbunden, wobei das erste Ende eines Zufuhrförderrohrs jeweils mit einer Aufgabeeinrichtung verbunden ist.

Sowohl die Zufuhr- und Abfuhrförderrohre sowie das Hauptförderrohr und die Fördergasnebenleitung sind über eine Rohrleitung mit einem Anschluss für Fördergas verbunden, das mit dem gewünschten Vordruck zur Verfügung steht. Als Druckfördereinrichtung sind beliebige Maschinen zur Erzeugung von Überdruck für Gase geeignet. Vorzugsweise wird ein Gebläse, ein Ventilator, ein Verdichter oder ein Kompressor eingesetzt. Die Druckfördereinrichtung ist jeweils mit dem ersten Ende eines Zufuhrförderrohrs und dem ersten Ende des Hauptförderrohrs absperrbar verbunden.

Alle Einrichtungen der erfindungsgemäßen Vorrichtung, z.B. die Abgabe- und Aufgabeeinrichtungen sowie die Saug- und Druckfördereinrichtung, können zur Vermeidung von Kontamination der Umgebung (mit Glasfaserstaub) mit einer Filtration versehen werden. Hierzu werden z.B. selbstreinigende Filtereinrichtungen verwendet.

Bei den Absperreinrichtungen handelt es sich insbesondere um Hähne, Rohrweichen oder Ventile. An beiden Enden der Zufuhrförderrohre, das heißt zwischen der Aufgabeeinrichtung und dem jeweiligen Zufuhrförderrohr sowie zwischen dem jeweiligen Zufuhrförderrohr und dem Hauptförderrohr sind bevorzugt Quetschventile vorgesehen. Außerdem sind die Absperreinrichtungen für die Verbindung der Abfuhrförderrohre mit dem Hauptförderrohr vorzugsweise Quetschventile.

Die Absperreinrichtungen in den Verbindungsleitungen sind bevorzugt zweistufig ausgebildet, wobei die erste Stufe mit dem Hauptförderrohr, den Zufuhrförderrohren und/oder den Abfuhrförderrohren verbunden ist und rückschlagsichernd gegenüber erhöhtem Druck im Hauptförderrohr ausgebildet ist. Außerdem ist die zweite Stufe der Absperreinrichtungen bevorzugt mit der Fördergasnebenleitung verbunden und als Einlassventil mit Druckvoreinstellung ausgebildet.

Weiterer Gegenstand der Erfindung ist ein Verfahren zur Förderung von feinteiligem Schüttgut unter Verwendung der erfindungsgemäßen Vorrichtung, gekennzeichnet durch die folgenden Schritte:
(a) Öffnen jeweils einer der Absperreinrichtungen (11A, 11B, 11C), (10A, 10B, 10C) und (18A, 18B, 18C) sowie (13)
(b) Ansaugen von Schüttgut aus einer der Aufgabeeinrichtungen (1A, 1B, 1C) in eines der Zufuhrförderrohre (2A, 2B, 2C) mittels der Saugfördereinrichtung (3)
(c) Schließen der Absperreinrichtungen (11A, 11B, 11C) und (10A, 10B, 10C)
(d) Öffnen jeweils einer der Absperreinrichtungen (12A, 12B, 12C) und (15A, 15B, 15C)
(e) Fördern des in Schritt (b) angesaugten Schüttguts in das Hauptförderrohr (17) mittels der Druckfördereinrichtung (16)
(f) Schließen der Absperreinrichtungen (12A, 12B, 12C) und (15A, 15B, 15C)
(g) Öffnen der Absperreinrichtung (14)
(h) Fördern des in Schritt (e) in das Hauptförderrohr (17) geförderten Schüttguts in eines der Abfuhrförderrohre (19A, 19B, 19C) mittels der Druckförderung (16)
(i) Schließen der Absperreinrichtung (14)

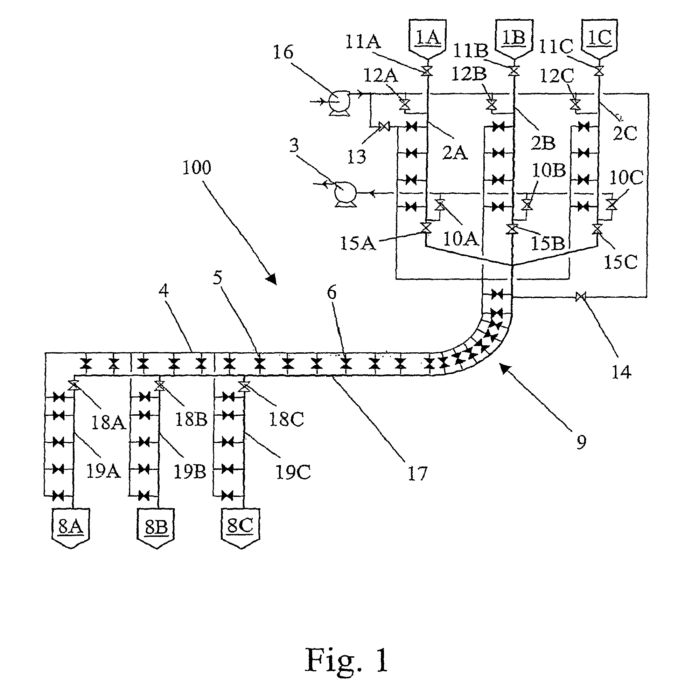

Das erfindungsgemäße Verfahren kann einfach oder mehrfach ausgeführt werden. Wird es mehrfach ausgeführt, schließt sich an Schritt (i) unmittelbar der Schritt (a), sodass die Schritte (a) bis (i) zyklisch durchlaufen werden. Vorzugweise werden die Schritte (g), (h) und (i) (Fördern im Hauptförderrohr) sowie (a), (b) und (c) (Füllen eines Zufuhrförderrohres) gleichzeitig betrieben. Nach Schritt (f) folgen dann schon die Schritte (a), (b) und (c), während die Schritte (g), (h) und (i) ausgeführt werden. Sollte z.B. der Aufgabebehälter 1A leer sein, kann direkt auf einen vollen Aufgabebehälter, z.B. 1B, und dessen Zufuhrförderrohr umgeschaltet werden. Der leere Aufgabebehälter kann dann neu befüllt oder durch einen vollen Aufgabebehälter ersetzt werden, während die Fördervorrichtung weiterläuft. Dies stellt einen erheblichen Vorteil im Sinne des kontinuierlichen Betriebs der erfindungsgemäßen Anlage dar. Da auf diese Weise der langfristig kontinuierliche Betrieb der Anlage gewährleistet ist, kann auf sehr große Vorratsbehälter, wie z.B. Bunker oder Kellerräume, verzichtet werden. Außerdem kann die Fördervorrichtung gegebenenfalls direkt aus Schüttgutcontainern gefüllt werden. Auch ist eine Produktumstellung von z.B. einer Schüttgutqualität in einer ersten Aufgabeeinrichtung (z.B. 1A in Fig. 1) auf eine andere Schüttgutqualität in einer zweiten Aufgabeeinrichtung (z.B. 1B in Fig. 1) ohne Weiteres möglich, d.h. ohne dass zuerst eine Aufgabeeinrichtung leergefahren oder ersetzt werden muss. Dies stellt einen erheblichen logistischen Vorteil dar.

Die Erfindung wird anhand der beigefügten Zeichnung näher erläutert.

Figur 1 zeigt schematisch die erfindungsgemäße Vorrichtung zur pneumatischen Förderung von feinteiligen Schüttgütern, insbesondere geschnittenen Glasfasern, 100. Die Zufuhrförderrohre 2A, 2B, 2C sowie die Abfuhrförderrohre 19A, 19B, 19C sind an das Hauptförderrohr 17 angeschlossen. Dabei ist jeweils das erste Ende der Zufuhrförderrohre 2A, 2B, 2C mit jeweils einer Aufgabeeinrichtung 1A, 1B, 1C verbunden und jeweils das erste Ende der Abfuhrförderrohre 19A, 19B, 19C mit jeweils einer Abgabeeinrichtung 8A, 8B, 8C verbunden. Das jeweils zweite Ende der Zufuhrförderrohre 2A, 2B, 2C ist mit dem ersten Ende des Hauptförderrohres 17 und das jeweils zweite Ende der Abfuhrförderrohre 19A, 19B, 19C mit dem zweiten Ende des Hauptförderrohres 17 verbunden.

Die Zufuhrförderrohre 2A, 2B, 2C tragen Absperreinrichtungen 11A, 11B, 11C sowie 15A, 15B, 15C, die Abfuhrförderrohre 19A, 19B, 19C die Absperreinrichtungen 18A, 18B, 18C.

Eine Fördergasnebenleitung 4 ist dem Hauptförderrohr 17 sowie den Zufuhrförderrohren 2A, 2B, 2C und Abführförderrohren 19A, 19B, 19C parallel geschaltet und über Verbindungsleitungen 5 mit Absperreinrichtungen 6 verbunden.

Eine Saugfördereinrichtung 3 ist jeweils mit dem zweiten Ende eines Zufuhrförderrohrs 2A, 2B, 2C absperrbar verbunden. Außerdem ist eine Druckfördereinrichtung 16 jeweils mit dem ersten Ende eines Zufuhrförderrohrs 2A, 2B, 2C und dem ersten Ende des Hauptförderrohrs 17 absperrbar verbunden.

Die Glasfasern können beispielsweise als Flocke aus ca. 2000 Fasern mit einer Länge von 4,5 mm und etwa 0,5 mm Durchmesseer vorliegen. Der Einzelfaserdurchmesser ist ca. 10 µm.

Die Vorrichtung 100 wird beispielsweise wie folgt betrieben:

Die zu fördernden, geschnittenen Glasfasern (nicht dargestellt) befinden sich in Aufgabebehältern 1A, 1B, 1C. Alle Absperreinrichtungen, z.B. Hähne, sind geschlossen. Absperreinrichtung 13 sowie eine der Absperreinrichtungen 18A, 18B, 18C werden geöffnet, damit das Hauptförderrohr 17 mit einem der Abgabebehälter 8A, 8B, 8C in Verbindung steht.

In einem ersten Schritt werden die Absperreinrichtungen 10A und 11A geöffnet und mittels des Gebläses 3 eine Portion von z.B. ca. 150 kg der geschnittenen Glasfasern innerhalb von z.B. 1 min aus dem Aufgabebehälter 1A in das pneumatische Zufuhrförderrohr 2A gesaugt. Die Hähne 10A und 11A werden geschlossen.

In einem zweiten Schritt werden die Hähne 12A und 15A geöffnet und die im ersten Schritt in das Zufuhrförderrohr 2A geförderte Portion an geschnittenen Glasfasern innerhalb von z.B. 20 sec durch das Fördergas in das Hauptförderrohr 17 mittels der Druckförderung 16 gefördert. Als Fördergas wird Druckluft verwendet. Der Druck der Druckluft wird durch das Gebläse 16 aufgebaut. Die Hähne 12A und 15A werden geschlossen, der Halm 13 bleibt geöffnet, um die Fördergasnebenleitung 4 mit Druckluft zu versorgen.

In einem dritten Schritt wird der Hahn 14 geöffnet. Die im zweiten Schritt in das Hauptförderrohr 17 geförderte Aufgabeportion an geschnittenen Glasfasern wird nun mit Hilfe der Druckluft durch das Hauptförderrohr 17 bis zu einer der Abgabestellen 8A, 8B, 8C gefördert, je nachdem, welcher Hahn 18A, 18B, 18C geöffnet ist. Die Förderung erfolgt innerhalb von z.B. 2 min. Die Druckluftmenge ist auf 200 m³/h unter Normalbedingungen eingestellt, was einer Gasleerrohrgeschwindigkeit von ca. 5 m/s entspricht. Anschließend wird Hahn 14 geschlossen.

Während des dritten Schritts eines Förderzyklus wird bereits der erste Schritt des nächsten Förderzyklus ausgeführt.

Im Falle einsetzender oder auftretender Verstopfungen öffnen die Absperreinrichtungen 6, die im Bereich der Zufuhrförderrohre 2A, 2B, 2C und Abfuhrförderrohre 19A, 19B, 19C sowie des Hauptförderrohres 17 über kurze Rohrstücke 5 mit der Fördergasnebenleitung 4 verbunden sind. Dadurch wird die Förderung der Aufgabeportion der geschnittenen Glasfasern hinter der einsetzenden oder auftretenden Verstopfung aufrecht erhalten. Durch die eintretende Druckluft aus der Fördergasnebenleitung 4 werden die einsetzenden oder auftretenden Verstopfungen gelockert und schließlich aufgelöst.

Im Bereich 9 des Hauptförderrohres 17 ist beispielhaft eine Krümmung des Förderrohrs gezeigt, in der die Gefahr einer Verstopfung erhöht ist.

Wenn der Aufgabebehälter 1A leer ist, finden die Einfüll- und Förderzyklen wie oben beschrieben statt, mit dem Unterschied, dass das Zufuhrförderrohr 2B oder 2C mit dem zugehörigen Behälter 1A oder 1B und Absperreinrichtungen 11B, 10B und 15B bzw. 11C, 10C und 15C verwendet werden.

## Patentansprüche

1. Vorrichtung zur pneumatischen Förderung von feinteiligen Schüttgütern, insbesondere Glasfasern, bestehend aus
(i) zwei oder mehreren Aufgabeeinrichtungen (1A, 1B, 1C), welche jeweils über eine Absperreinrichtung (11A, 11B, 11C) mit einem ersten Ende eines Zufuhrförderrohrs (2A, 2B, 2C) verbunden sind, wobei das jeweils zweite Ende des Zufuhrförderrohrs (2A, 2B, 2C) im Bereich eines ersten Endes mit einem Hauptförderrohr (17) über eine Absperreinrichtung (15A, 15B, 15C) verbunden ist,
(ii) einer oder mehreren Abgabeeinrichtungen (8A, 8B, 8C), welche jeweils mit dem Hauptförderrohr (17) über eine Absperreinrichtung (18A, 18B, 18C) verbunden ist,
(iii) einer dem Hauptförderrohr (17) und den Zufuhrförderrohren (2A, 2B, 2C) parallel geschalteten Fördergasnebenleitung (4), wobei die Fördergasnebenleitung (4) durch eine Vielzahl von Verbindungsleitungen (5) mit dem Hauptförderrohr (17) und den Zufuhrförderrohren (2A, 2B, 2C) verbunden ist,
(iv) einer Saugfördereinrichtung (3), welche jeweils mit dem zweiten Ende eines Zufuhrförderrohrs (2A, 2B, 2C) mittels Absperreinrichtungen (10A, 10B, 10C) absperrbar verbunden ist,
(v) einer Druckfördereinrichtung (16), welche jeweils mit dem ersten Ende eines Zufuhrförderrohrs (2A, 2B, 2C) mittels Absperreinrichtungen (12A, 12B, 12C) und mit der Fördergasnebenleitung (4) mittels einer Absperreinrichtung (13) und mit dem ersten Ende des Hauptförderrohrs (17) mittels einer Absperreinrichtung (14) absperrbar verbunden ist,
(vi) und Absperreinrichtungen (6) in den Verbindungsleitungen (5).

2. Vorrichtung nach Anspruch 1, **dadurch gekennzeichnet, dass** die Abgabeeinrichtungen (8A, 8B, 8C) jeweils mit einem ersten Ende eines Abfuhrförderrohrs (19A, 19B, 19C) verbunden sind, wobei das jeweils zweite Ende des Abfuhrförderrohrs (19A, 19B, 19C) mit dem Hauptförderrohr (17) über die Absperreinrichtung (18A, 18B, 18C) verbunden ist.

3. Vorrichtung nach einem der Ansprüche 1 oder 2, **dadurch gekennzeichnet, dass** die Absperreinrichtungen (6) zweistufig ausgebildet sind, wobei die erste Stufe mit dem Hauptförderrohr (17), den Zufuhrförderrohren (2A, 2B, 2C) und/oder den Abfuhrförderrohren (19A, 19B, 19C) verbunden ist und rückschlagsichernd gegenüber erhöhtem Druck im Hauptförderrohr (17) ausgebildet ist.

4. Vorrichtung nach Anspruch 3, **dadurch gekennzeichnet, dass** die zweite Stufe der Absperreinrichtungen (6) mit der Fördergasnebenleitung (4) verbunden ist und als Einlassventil mit Druckvoreinstellung ausgebildet ist.

5. Vorrichtung nach einem der Ansprüche 1-4, **dadurch gekennzeichnet, dass** der Abstand zwischen zwei benachbarten Verbindungsleitungen (5) 200 bis 2000 mm beträgt.

6. Vorrichtung nach einem der Ansprüche 1-5, **dadurch gekennzeichnet, dass** die Absperreinrichtungen (15A, 15B, 15C), (12A, 12B, 12C) und/oder (18A, 18B, 18C) Quetschventile sind.

7. Vorrichtung nach einem der Ansprüche 1-6, **dadurch gekennzeichnet, dass** die Zufuhrförderrohre (2A, 2B, 2C) und/oder die Abfuhrförderrohre (19A, 19B, 19C) mittels Rohrweichen mit dem Hauptförderrohr (17) verbunden sind.

8. Verfahren zur Förderung von feinteiligem Schüttgut unter Verwendung einer Vorrichtung nach einem der Ansprüche 1-7, **gekennzeichnet durch** die folgenden Schritte:
(a) Öffnen jeweils einer der Absperreinrichtungen (11A, 11B, 11C), (10A, 10B, 10C) und (18A, 18B, 18C) sowie (13)
(b) Ansaugen von Schüttgut aus einer der Aufgabeeinrichtungen (1A, 1B, 1C) in eines der Zufuhrförderrohre (2A, 2B, 2C) mittels der Saugfördereinrichtung (3)
(c) Schließen der Absperreinrichtungen (11A, 11B, 11C) und (10A, 10B, 10C)
(d) Öffnen jeweils einer der Absperreinrichtungen (12A, 12B, 12C) und (15A, 15B, 15C)
(e) Fördern des in Schritt (b) angesaugten Schüttguts in das Hauptförderrohr (17) mittels der Druckfördereinrichtung (16)
(f) Schließen der Absperreinrichtungen (12A, 12B, 12C) und (15A, 15B, 15C)
(g) Öffnen der Absperreinrichtung (14)
(h) Fördern des in Schritt (e) in das Hauptförderrohr (17) geförderten Schüttguts in eines der Abfuhrförderrohre (19A, 19B, 19C) mittels der Druckförderung (16)
(i) Schließen der Absperreinrichtung (14)

## Claims

1. Device for pneumatically conveying fine-particle bulk materials, in particular glass fibres, comprising
(i) two or more charging devices (1A, 1B, 1C), which are respectively connected by way of a shut-off device (11A, 11B, 11C) to a first end of a feed conveying tube (2A, 2B, 2C), the respective second end of the feed conveying tube (2A, 2B, 2C) being connected in the region of a first end to a main conveying tube (17) by way of a shut-off device (15A, 15B, 15C),
(ii) one or more discharge devices (8A, 8B, 8C), which is respectively connected to the main conveying tube (17) by way of a shut-off device (18A, 18B, 18C),
(iii) a conveying gas subsidiary line (4) arranged parallel to the main conveying tube (17) and the feed conveying tubes (2A, 2B, 2C), the conveying gas subsidiary line (4) being connected by a multiplicity of connecting lines (5) to the main conveying tube (17) and the feed conveying tubes (2A, 2B, 2C),
(iv) a suction conveying device (3), which is respectively connected in a manner allowing it to be shut off to the second end of a feed conveying tube (2A, 2B, 2C) by means of shut-off devices (10A, 10B, 10C),
(v) a pressure conveying device (16), which is respectively connected in a manner allowing it to be shut off to the first end of a feed conveying tube (2A, 2B, 2C) by means of shut-off devices (12A, 12B, 12C) and to the conveying gas subsidiary line (4) by means of a shut-off device (13) and to the first end of the main conveying tube (17) by means of a shut-off device (14),
(vi) and shut-off devices (6) in the connecting lines (5).

2. Device according to Claim 1, **characterized in that** the discharge devices (8A, 8B, 8C) are respectively connected to a first end of a discharge conveying tube (19A, 19B, 19C), the respective second end of the discharge conveying tube (19A, 19B, 19C) being connected to the main conveying tube (17) by way of the shut-off device (18A, 18B, 18C).

3. Device according to either of Claims 1 and 2, **characterized in that** the shut-off devices (6) are of a two-stage form, the first stage being connected to the main conveying tube (17), the feed conveying tubes (2A, 2B, 2C) and/or the discharge conveying tubes (19A, 19B, 19C) and formed in a non-return manner with respect to increased pressure in the main conveying tube (17).

4. Device according to Claim 3, **characterized in that** the second stage of the shut-off devices (6) is connected to the conveying gas subsidiary line (4) and is formed as an inlet valve with pressure presetting.

5. Device according to one of Claims 1-4, **characterized in that** the distance between two neighbouring connecting lines (5) is 200 to 2000 mm.

6. Device according to one of Claims 1-5, **characterized in that** the shut-off devices (15A, 15B, 15C), (12A, 12B, 12C) and/or (18A, 18B, 18C) are pinch valves.

7. Device according to one of Claims 1-6, **characterized in that** the feed conveying tubes (2A, 2B, 2C) and/or the discharge conveying tubes (19A, 19B, 19C) are connected to the main conveying tube (17) by means of tube diverters.

8. Method for conveying fine-particle bulk materials by using a device according to one of Claims 1-7, **characterized by** the following steps:
(a) opening in each case one of the shut-off devices (11A, 11B, 11C), (10A, 10B, 10C) and (18A, 18B, 18C) as well as (13)
(b) sucking bulk material out of one of the charging devices (1A, 1B, 1C) into one of the feed conveying tubes (2A, 2B, 2C) by means of the suction conveying device (3)
(c) closing the shut-off devices (11A, 11B, 11C) and (10A, 10B, 10C)
(d) opening in each case one of the shut-off devices (12A, 12B, 12C) and (15A, 15B, 15C)
(e) conveying the bulk material sucked in in step (b) into the main conveying tube (17) by means of the pressure conveying device (16)
(f) closing the shut-off devices (12A, 12B, 12C) and (15A, 15B, 15C)
(g) opening the shut-off device (14)
(h) conveying the bulk material conveyed into the main conveying tube (17) in step (e) into one of the discharge conveying tubes (19A, 19B, 19C) by means of the pressure conveying device (16)
(i) closing the shut-off device (14).

## Revendications

1. Dispositif de transport pneumatique de matières en vrac en fines particules, en particulier de fibres de verre, constitué :
(i) d'un dispositif d'amenée (1A, 1B, 1C) relié par un dispositif de blocage (11A, 11B, 11C) à une première extrémité d'un tube de transport d'amenée (2A, 2B, 2C), la deuxième extrémité du tube de transport d'amenée (2A, 2B, 2C) étant reliée dans la zone d'une première extrémité à un tube de transport principal (17) par l'intermédiaire d'un dispositif de blocage (15A, 15B, 15C),
(ii) d'un dispositif d'extraction (8A, 8B, 8C) qui est relié au tube de transport principal (17) par un dispositif de blocage (18A, 18B, 18C),
(iii) d'un conduit secondaire (4) de gaz de transport raccordé parallèlement au tube de transport principal (17) et aux tubes de transport d'amenée (2A, 2B, 2C), le conduit secondaire (4) de gaz de transport étant relié par plusieurs conduits de liaison (5) au tube de transport principal (17) et aux tubes de transport d'amenée (2A, 2B, 2C),
(iv) d'un dispositif de transport par aspiration (3) qui est relié à la deuxième extrémité d'un tube de transport d'amenée (2A, 2B, 2C) au moyen de dispositifs de blocage (10A, 10B, 10C),
(v) d'un dispositif de transport sous pression (16) relié de manière à pouvoir être bloqué à la première extrémité d'un tube de transport d'amenée (2A, 2B, 2C) au moyen de dispositifs de blocage (12A, 12B, 12C), au conduit secondaire (4) de gaz de transport au moyen d'un dispositif de blocage (13) et à la première extrémité du tube de transport principal (17) au moyen d'un dispositif de blocage (14) et
(vi) de dispositifs de blocage (6) prévus dans les conduits de liaison (5).

2. Dispositif selon la revendication 1, **caractérisé en ce que** chacun des dispositifs d'extraction (8A, 8B, 8C) est relié à une première extrémité d'un tube de transport d'évacuation (19A, 19B, 19C) respectif, la deuxième extrémité du tube de transport d'évacuation (19A, 19B, 19C) étant reliée au tube de transport principal (17) par le dispositif de blocage (18A, 18B, 18C).

3. Dispositif selon l'une des revendications 1 ou 2, **caractérisé en ce que** les dispositifs de blocage (6) sont réalisés en deux étages, le premier étage étant relié au tube de transport principal (17), aux tubes de transport d'amenée (2A, 2B, 2C) et/ou aux tubes de transport d'évacuation (19A, 19B, 19C) et étant configuré de manière à empêcher les retours au cas où la pression est plus élevée dans le tube de transport principal (17).

4. Dispositif selon la revendication 3, **caractérisé en ce que** le deuxième étage des dispositifs de blocage (6) est relié au conduit secondaire (4) de gaz de transport et est configuré comme soupape d'admission à préréglage de la pression.

5. Dispositif selon l'une des revendications 1 à 4, **caractérisé en ce que** la distance entre deux conduits de liaison (5) voisins est comprise entre 200 et 2 000 mm.

6. Dispositif selon l'une des revendications 1 à 5,
**caractérisé en ce que** les dispositifs de blocage (15A, 15B, 15C), (12A, 12B, 12C) et/ou (18A, 18B, 18C) sont des soupapes écrasables.

7. Dispositif selon l'une des revendications 1 à 6, **caractérisé en ce que** les tubes de transport d'amenée (2A, 2B, 2C) et/ou les tubes de transport d'évacuation (19A, 19B, 19C) sont reliés au tube de transport principal (17) par des ramifications tubulaires.

8. Procédé de transport de matière en vrac en fines particules par recours à un dispositif selon l'une des revendications 1 à 7, ledit procédé étant **caractérisé par** les étapes qui consistent à :
(a) ouvrir un des dispositifs de blocage (11A, 11B, 11C), (10A, 10B, 10C), (18A, 18B, 18C) et (13),
(b) aspirer la matière en vrac de l'un des dispositifs d'amenée (1A, 1B, 1C) dans un des tubes de transport d'amenée (2A, 2B, 2C) au moyen du dispositif de transport par aspiration (3),
(c) fermer les dispositifs de blocage (11A, 11B, 11C) et (10A, 10B, 10C),
(d) ouvrir l'un des dispositifs de blocage (12A, 12B, 12C) et (15A, 15B, 15C),
(e) transporter la matière en vrac aspirée à l'étape (b) dans le tube de transport principal (17) au moyen du dispositif de transport sous pression (16),
(f) fermer les dispositifs de blocage (12A, 12B, 12C) et (15A, 15B, 15C),
(g) ouvrir le dispositif de blocage (14),
(h) transporter la matière en vrac transportée à l'étape (e) dans le tube de transport principal (17) dans l'un des tubes de transport d'évacuation (19A, 19B, 19C) au moyen du transport sous pression (16) et
(i) fermer le dispositif de blocage (14).
